**Europäisches Patentamt**

**European Patent Office**

**Office européen des brevets**

(19)

(11) Veröffentlichungsnummer: **0 316 547 B1**

(12)

# EUROPÄISCHE PATENTSCHRIFT

(45) Veröffentlichungstag der Patentschrift :
03.07.91 Patentblatt 91/27

(51) Int. Cl.⁵ : **F16H 21/50, F04B 7/06**

(21) Anmeldenummer : 88115858.8

(22) Anmeldetag : 27.09.88

(54) Gelenk zur Übertragung des Drehmomentes einer ersten Welle auf eine zweite Welle.

(30) Priorität : 17.11.87 DE 3738951

(43) Veröffentlichungstag der Anmeldung :
24.05.89 Patentblatt 89/21

(45) Bekanntmachung des Hinweises auf die
Patenterteilung :
03.07.91 Patentblatt 91/27

(84) Benannte Vertragsstaaten :
AT BE CH DE ES FR GB GR IT LI LU NL SE

(56) Entgegenhaltungen :
CH-A- 474 695
DE-C- 943 876
FR-A- 1 125 053
GB-A- 1 213 830

(73) Patentinhaber : Marpert, Heinrich, Dipl.-Ing.
Carlo-Mierendorff-Strasse 18
W-6300 Giessen (DE)
Patentinhaber : Marpert, Mark Paul
Carlo-Mierendorff-Strasse 18
W-6300 Giessen (DE)

(72) Erfinder : Marpert, Heinrich, Dipl.-Ing.
Carlo-Mierendorff-Strasse 18
W-6300 Giessen (DE)
Erfinder : Marpert, Mark Paul
Carlo-Mierendorff-Strasse 18
W-6300 Giessen (DE)

(74) Vertreter : Knefel, Siegfried, Dipl.-Math.
Wertherstrasse 16 Postfach 1924
W-6330 Wetzlar (DE)

## Beschreibung

Die Erfindung betrifft eine Verbindung zwischen zwei Wellen, bei denen die erste Welle nur um ihre Achse drehbar ist, die zweite Welle jedoch sowohl eine Drehbewegung um ihre Achse als auch eine axiale Bewegung in Richtung ihrer Achse ausführen soll und eine einstellbare oder vorgegebene Hubbewegung ausführen soll. Beispielsweise löst eine Drehbewegung einer Kurbelwelle bei einem Motor nur eine Hubbewegung der Kolbenstange des zu bewegenden Kolbens aus, bewirkt jedoch keine Drehung. Deshalb sind bei einem Verbrennungsmotor Ein- und Auslaßventile erforderlich, die aber stets federbelastet sind und deshalb häufig für die vorgesehenen Zwecke nicht genau genug ansprechen.

Aus diesem Grunde kennt man Verbindungen, bei denen die Drehbewegung auf die zweite Welle von der ersten Welle derart übertragen wird, daß die zweite Welle sowohl eine Drehbewegung als auch eine Hubbewegung ausführt. Die Hubbewegung kommt dadurch zustande, daß die zweite Welle unter einem Winkel zur ersten Welle geneigt angeordnet ist. Die zweite Welle kann einen Kolben tragen, in dem eine seitliche Öffnung vorgesehen ist, die sowohl bei der Drehbewegung als auch bei der Hubbewegung Steuerschlitze im Zylinder mehr oder minder öffnet bzw. schließt. Hierdurch kommt man einerseits zu sehr exakten Steuerergebnissen und braucht keine Ein- und Auslaßventile.

Derartige Einrichtungen werden zur kinetischen Energieübertragung verwendet, aber auch für den genauen Antrieb von Kolbenpumpen oder Membranpumpen, insbesondere von Steuerkolbenpumpen, weil der Ein- und Auslaß des Mediums ohne Ventile durch die vorgesehenen Schlitze sowohl durch die Drehbewegung als auch durch die Hubbewegung des Kolbens sehr exakt bestimmbar wird.

Eine praktische Anwendung finden derartige Einrichtungen beispielsweise im Chemiebereich, wo genau dosierte Mengen, beispielsweise eine Medizin, in Ampullen abzufüllen sind, aber auch im Lebensmittelbereich, damit die Lebensmittel genau dosiert abgepackt werden können. Da jede Pumpe in der Umkehrung auch als Antrieb für einen Motor dienen kann, finden sich eine große Zahl weiterer Anwendungsmöglichkeiten. Beispielsweise dient eine solche Einrichtung als Werkzeughalterung, wobei das Werkzeug innerhalb gewisser Grenzen eine feinfühlig verstellbare Hubbewegung ausführen soll (CH-A-474 695).

Die Übertragung der Drehbewegung einer ersten Welle in eine Dreh- und Hubbewegung einer zweiten Welle ist grundsätzlich bekannt. Beispielsweise aus Dubbel, "Taschenbuch des Ingenieurs", 14. Auflage, Seite 511 rechts unten. Hier wird zum Antrieb der zweiten Welle eine Schrägscheibe in Verbindung mit einer Schrägachsenpumpe verwendet. Diese Ausführung ist recht kompliziert und entspricht nicht den Genauigkeitsansprüchen, wie sie die Erfindung anstrebt. Auch aus dem Buch von Dürr und Wachter "Hydraulik in Werkzeugmaschinen", 6. Auflage, sind auf den Seiten 77 und 78 derartige Pumpen vorgestellt. Man erkennt auf den ersten Blick, daß diese Pumpen eine sehr komplizierte und aufwendige Verbindung zwischen den einzelnen Wellen erfordern. Die Ausführung gemäß der CH-A-474 695 sieht zwei kreuzförmig vorgesehene Bolzen zwischen dem antreibenden Teil und dem angetriebenen Teil vor. Diese Verbindung gestattet es nur, in einem eng begrenzten Winkelbereich eine feinfühlige Verstellung der Hubgröße des angetriebenen Werkzeuges vorzunehmen.

Aufgabe der Erfindung ist es, eine Verbindung zwischen den Wellen anzugeben, bei der der Anstellwinkel der zweiten Welle praktisch beliebig groß sein kann, zumindest aber weit über die nach dem Stand der Technik erreichten 15 bis 20° hinausgehen kann, und die darüber hinaus trotzdem eine äußerst genaue Hubgrößeneinstellung erlaubt.

Diese Aufgabe wird durch das kennzeichnende Merkmal des Anspruches 1 gelöst.

Gemäß dieser Lösung ist die erste Welle nur drehbar, d.h. nicht axial verschiebbar. Sie trägt in einer Führung oder dergleichen einen axial verschiebbaren und auch drehbaren Bolzen. Dieser Bolzen ist mit der zweiten schräg angestellten Welle verbunden, und zwar mittels Verbindungsmittel, welche vorzugsweise ebenfalls axial verschiebbar und drehbar sind, beispielsweise einem weiteren Bolzen. Die Bolzen selbst können im festen Winkel, insbesondere rechtwinklig miteinander verbunden sein, wenn nur ihre Führungsmittel in den Wellen bzw. Verbindungsstücken geeignet ausgebildet sind. Der Schnittpunkt der Achsen der Bolzen soll, wie weiter offenbart werden wird, nicht mit dem Schnittpunkt der Achsen der Wellen zusammenfallen. In diesem Fall führt, wie gefunden wurde, der erste Bolzen bzw. sein Lager eine kreisförmige Bewegung um die Achse der ersten Welle aus, und der zweite Bolzen führt eine kreisförmige Bewegung um die Achse der zweiten Welle durch, gleichzeitig aber auch eine Hubbewegung, weil die um die Achsen bewegten Punkte des Gelenkes zwar ebenfalls zunächst eine kreisförmige Bewegung ausführen, so daß nach den Gesetzen der darstellenden Geometrie zwei zueinander schräg angestellte Zylinder entstehen, welche eine Schnittfläche und damit Umlauffläche für den zweiten Bolzen bilden, die nach den mathematischen Erkenntnissen eine Ellipse darstellt. Hierzu kommt, daß die Achsen der beiden Wellen sich in einem Punkt schneiden können, wenn nur ein Abstand des Kreuzungspunktes der Bolzen vorhanden ist. Es können aber auch die Achsen der beiden Wellen aneinander vorbeilaufen, so daß sie in einem ganz bestimmten Punkt eine kürzeste Verbindungslinie zueinander aufweisen. Da die

EP 0 316 547 B1

Verbindungsmittel der zweiten Welle eine Ellipse beschreiben, kommt durch deren Exzentrizität die zusätzliche Versatzbewegung (Hubbewegung) zwangsläufig zustande.

Treffen sich die Achsen der beiden Wellen nicht, sondern laufen aneinander vorbei, erhält man hinsichtlich der Bewegung der zweiten Welle eine zusätzliche elliptische überlagerung der Bewegungsbahnen. Im Prinzip ändert sich jedoch hierdurch nichts.

Die Größe der Exzentrizität der Ellipse und damit der Hubbewegung der zweiten Welle ist nicht nur von dem Abstand der Schnittpunkte abhängig sondern auch vom Anstellwinkel der zweiten Welle.

Zusätzlich geht die Entfernung des Schnittpunktes der Achsen der beiden Bolzen oder falls diese sich nicht schneiden, wiederum die Stelle des kürzesten Abstandes der Achsen voneinander von einer der Achsen der Wellen in die Rechnung ein.

Durch die mathematische Gesetzmäßigkeit bestimmt, kann gemäß der Erfindung der Einstellwinkel zwischen den Wellen beliebig groß gemacht werden und damit auch die Hubgröße, was nach dem Stand der Technik bisher nicht möglich war.

Weitere Merkmale der Erfindung können den Unteransprüchen sowie der Beschreibung von Ausführungsbeispielen entnommen werden.

In den Zeichnungen sind Ausführungsbeispiele der Erfindung dargestellt, und zwar zeigen :

| | |
|---|---|
| Fig. 1 | einen Querschnitt durch eine Dosierpumpe, beispielsweise für meß- und regeltechnische Aufgaben mit einstellbarem Hub ; |
| Fig. 2 | die Draufsicht auf die Fig. 1, teilweise geschnitten, nach der Linie XII-XII ; |
| Fig. 3 | eine Darstellung zur Erläuterung der Wirkungsweise der Erfindung, teilweise geschnitten; |
| Fig. 4 | das Ausführungsbeispiel nach Fig. 3, jedoch mit um 90° verdrehter Welle ; |
| Fig. 5 | einen Querschnitt durch ein geändertes Ausführungsbeispiel ; |
| Fig. 6 | einen Schnitt nach der Linie VI-VI der Fig. 5 in um 90° verdrehter Welle ; |
| Fig. 7 | einen Schnitt nach der Linie VII-VII der Fig. 6 ; |
| Fig. 8 | einen Querschnitt durch ein geändertes Ausführungsbeispiel ; |
| Fig. 9 | einen Schnitt nach der Linie IX-IX der Fig. 8 mit um 90° gedrehter Welle ; |
| Fig. 10 | einen Schnitt nach der Linie X-X der Fig. 9 ; |
| Fig. 11a bis 11f | Teilschnitte und Seitenansichten verschiedener Kreuzverbindungen gemäß der Erfindung ; |
| Fig. 12a bis 12h | Teilschnitte und Seitenansichten verschiedener Kreuzverbindungen ; |
| Fig. 13a bis 13h | Teilschnitte und Seitenansichten verschiedener Kreuzverbindungen ; |
| Fig. 14a bis 14f | Teilschnitte und Seitenansichten verschiedener Kreuzverbindungen ; |
| Fig. 15 | ein geändertes Ausführungsbeispiel ; |
| Fig. 16 | die Ansicht der Fig. 4 in Richtung des Pfeiles XI ; |
| Fig. 17 | das Ausführungsbeispiel der Fig. 3 mit um 180° gedrehter Welle ; |
| Fig. 18a bis 18f | Teilschnitte und Seitenansichten verschiedener Kreuzverbindungen. |

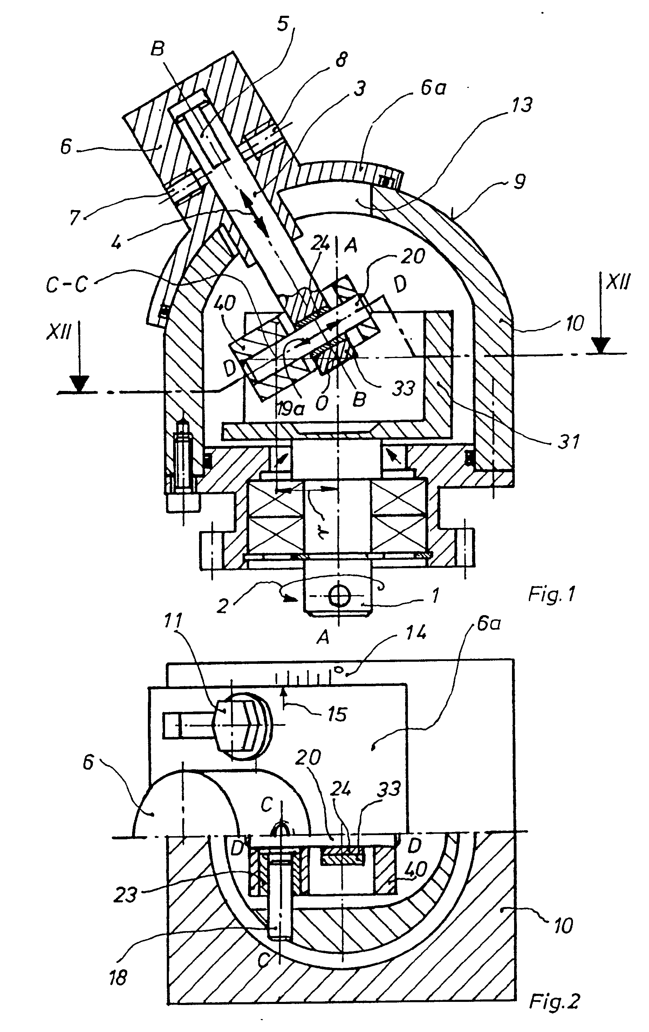

Gemäß Fig. 1 ist eine in Richtung des Pfeiles (2) drehbare Antriebswelle (1) vorgesehen, welche in axialer Richtung nicht bewegbar ist. Die Drehbewegung der Antriebswelle (1) soll auf eine Welle (3) übertragen werden, derart, daß diese um ihre Achse (B-B) eine Drehbewegung ausführt, zugleich aber auch in Richtung des Pfeiles (4) eine Hubbewegung. Im vorliegenden Fall ist die Welle (3) mit Schlitzen (5) versehen, und der Zylinder (6) trägt entsprechende Einlaß- (7) und Auslaßschlitze (8), derart, daß, wenn durch die Drehung der Welle (1) bedingt eine Verschiebung der Welle (3) in Richtung des Pfeiles (4) erfolgt, mehr oder minder Gas oder eine Flüssigkeit oder dergleichen durch die Schlitze (7, 8) fließen kann. Das Maß der Durchflußmenge ist regelbar, und zwar durch winkelmäßige Anstellung der Achse (B-B) zur Achse (A-A) der Welle (1), indem die Welle (3) in einem Zylinder (6) angeordnet ist, welches als Kalotte (6a) ausgebildet ist und auf einer entsprechenden Gegenfläche (9) des Gehäuses (10) verstellbar angeordnet ist. Mittels Schrauben (11) (Fig. 2) kann der Winkel zwischen den Achsen (A-A und B-B) jederzeit innerhalb des vorgegebenen Spieles (13) eingestellt und fixiert werden. Eine Skala (14) in Verbindung mit einer auf der Kalotte (6a) vorgesehenen Marke (15) läßt die Einstellgröße ablesen und damit den Hub, wenn die Einrichtung nach Fig. 1 als Dosierpumpe benutzt wird.

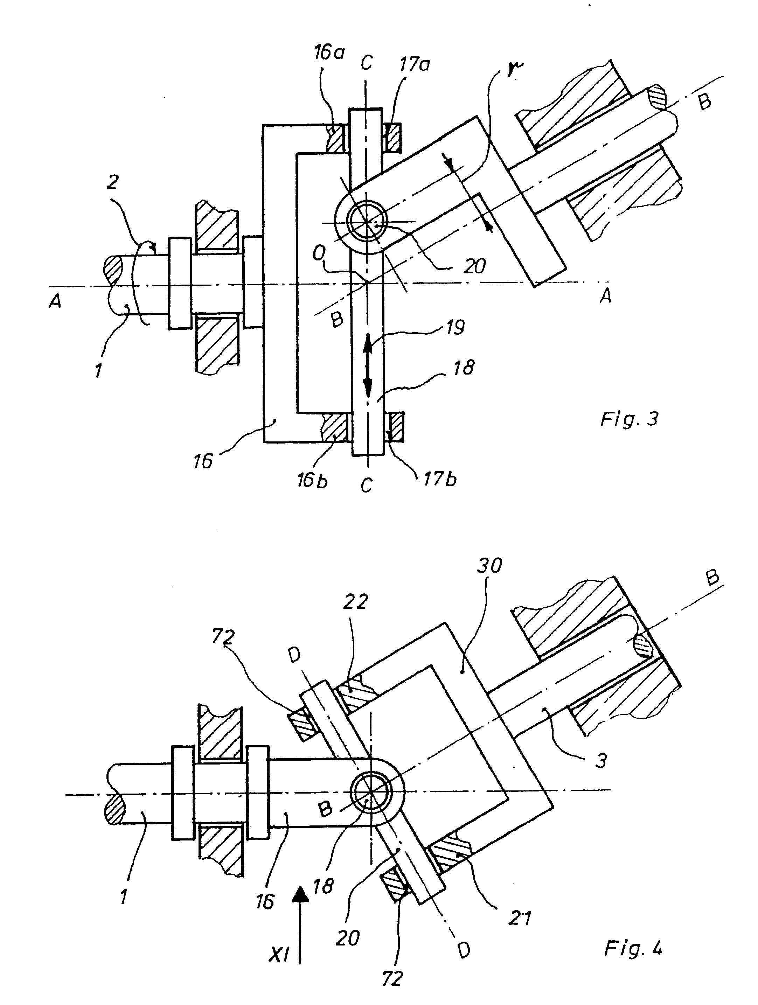

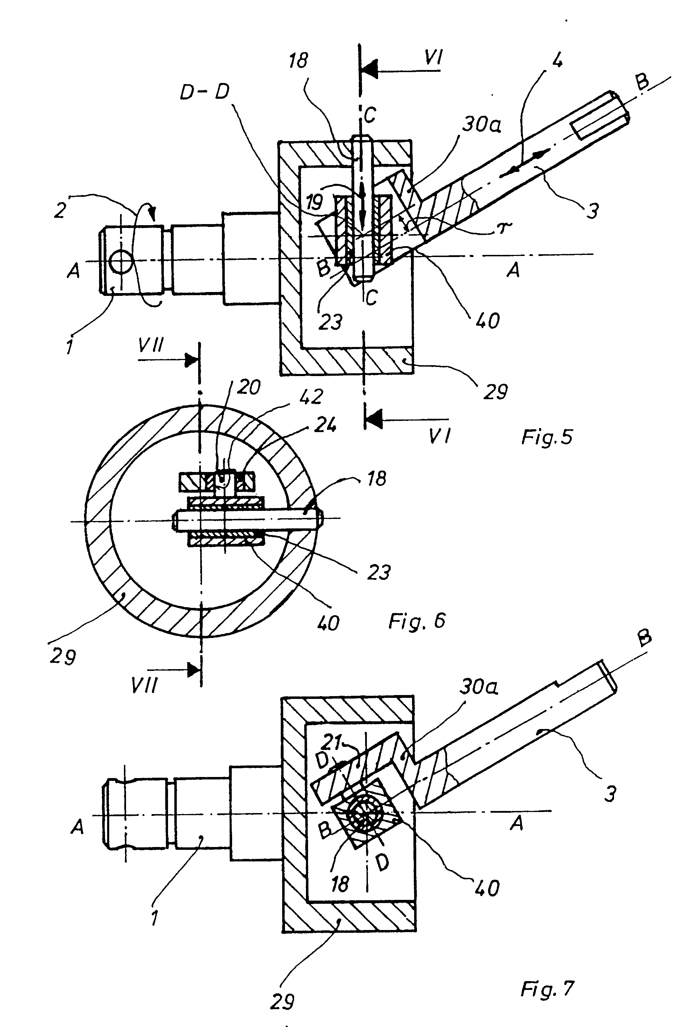

Damit von der Welle (1) auf die Welle (3) die Drehbewegung der Welle (1) übertragen wird, und die Welle (3) gleichzeitig eine Hubbewegung vorbestimmter Größe ausführt, läuft gemäß den Fig. 3 und 4 die Welle (1) in eine Gabel (16) aus, welche gemäß Fig. 3 mit ihren Zinken (16a, 16b) symmetrisch zur Achse (A-A) angeordnet ist, aber auch unsymmetrisch zur Achse (A-A) angeordnet sein könnte. In den Zinken (16a, 16b) sind Führungen, im vorliegenden Fall Bohrungen (17a, 17b) für einen Bolzen (18) vorgesehen, der sich in Richtung des Pfeiles (19) bewegen kann. Der Bolzen (18) ist aus noch zu beschreibenden Gründen nicht nur axial verschiebbar, sondern auch um seine Achse (C-C) drehbar. Der Bolzen (18) ist, wie aus Fig. 4 zuerkennen ist,

3

mit einem zweiten Bolzen (20), der senkrecht zum ersten Bolzen (18) angeordnet ist, fest verbunden. Der Bolzen (20) ist in Bohrungen (72) der Schenkel (21, 22) einer weiteren Gabel (30) gelagert, welche von der Welle (3) getragen wird.

Wie zu erkennen ist, bilden die beiden Bolzen (18, 20) eine Verbindung zwischen den Wellen (1, 3), welche gemäß der Erfindung als Kreuzgelenk bezeichnet wird.

Die Wirkungsweise der Einrichtung ist wie folgt : Dreht sich die Welle (1) in Richtung des Pfeiles (2), dreht sich entsprechend die Gabel (16). Der in der Gabel (16) gelagerte Bolzen (18) (Fig. 3) dreht sich entsprechend mit. Da er kreuzförmig mit dem Bolzen (20) verbunden ist, der in Bohrungen (72) gelagert ist, wird die Drehung der Welle (1) auf die Welle (3) übertragen. Da die Gabeln (16, 30) bei ihrer Drehung Kreiszylinder beschreiben, muß der Bolzen (18) in Richtung des Pfeiles (19) axial verschiebbar gelagert sein. Wie ferner zu erkennen ist, schneiden sich die Achsen der Bolzen (18, 20) im Abstand (r) vom Schnittpunkt der Achsen (Fig. 3) der Wellen (1, 3), so daß zu der Drehbewegung der Welle (3) um ihre Achse eine Hubbewegung in Richtung der Achse (B-B) der Welle (3) erfolgt.

Dies ist das Grundprinzip der Erfindung. Es läßt sich in vielen Varianten abändern, denn es bestimmt nicht nur der Abstand (r) die Größe der Hubbewegung der Welle (3) sondern auch die Lage der Schnittpunkte der Achsen der Wellen sowie der Schnittpunkte der Bolzen zueinander, wobei darüber hinaus sich die genannten Achsen nicht einmal in einem Punkt schneiden müssen. In diesem Fall geht die kürzeste Verbindungslinie der zusammengehörenden Achsen in die Rechnung ein.

Gemäß den Fig. 5 bis 7 läuft die Welle (1) in eine Trommel (29) aus, in der der Bolzen (18) in einer mit Keramik ausgelegten Bohrung (23) des Verbindungsstückes (40) einseitig gelagert ist. Die das Verbindungsstück (40) tragende Verlängerung (30a), wie insbesondere aus Fig. 7 zu erkennen ist, ist einseitig zur Achse (B-B) der Welle (3) abgeknickt, läuft also L-förmig in die Welle (3) ein. Das Verbindungsstück (40) mit seiner Keramikeinlage (23) ist so lang ausgebildet, daß es die beiden Bohrungen (17a, 17b) der Fig. 3 ersetzt. Diese Ausbildung ist platzsparender, weil nur ein Lagerelement für den Bolzen (18) erforderlich ist. Dasselbe betrifft die Keramikeinlage (24), die im L- förmigen Schenkel des Elementes (30) angeordnet ist, um dort einseitig den Bolzen (20) zu lagern (Fig. 6). Die Verlängerung (30a) mit den Schenkeln (21) ist mit der Welle (3) fest verbunden.

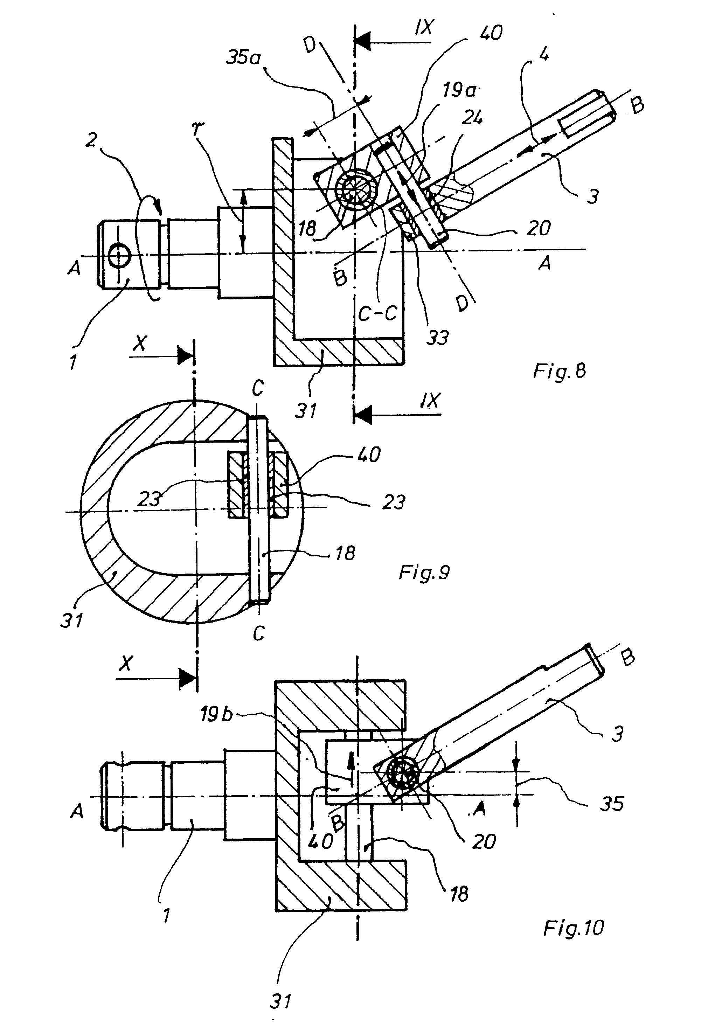

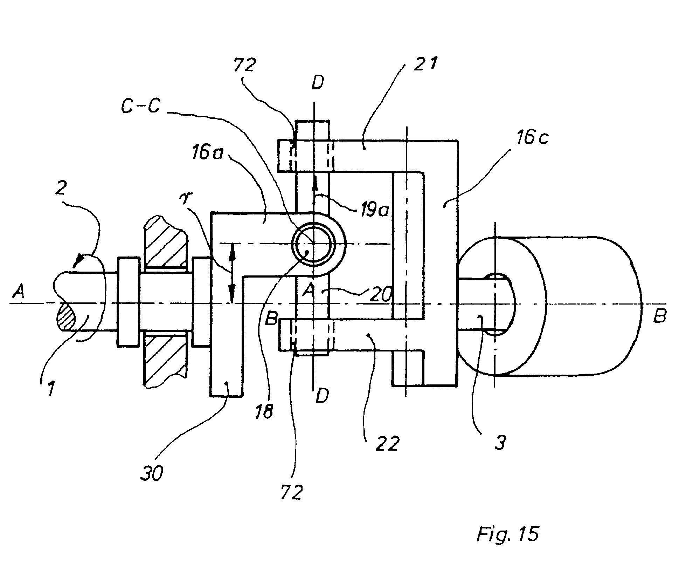

Gemäß den Fig. 8, 9 und 10 wird der Bolzen (18) von einem Joch (31) getragen, das fest mit der Welle (1) verbunden ist. Die Welle (3) läuft mittels eines Verbindungsstückes (40), das eine mit Keramik ausgelegte Bohrung (23) aufweist und das vermittels eines Bolzens (20) drehbar um die Achse (D-D) gelagert ist, ein und ist zusätzlich axial verschiebbar (Fig. 8). Bei dieser Ausbildung ersetzt das Wellenende (33) der Welle (3) zum Beispiel die Gabel (16c) der Fig. 15. Die Wirkungsweise dieser Einrichtung ist dieselbe wie bei dem vorhergehenden Beispiel, nur daß hier eine zusätzliche Längsbewegung in Richtung des Pfeiles (19b) erfolgt, und zwar aufgrund des Versatzes (35a), der zwischen den Achsen (C-C und D-D) der Bolzen entstanden ist. Im vorliegenden Fall überlagern sich mehrere Laufkurven. Diese Ausbildung kann aus konstruktiven Gründen günstig sein, weil sie platzsparend ist.

Wesentlich ist, daß zwischen der Welle (1) und der Welle (3) stets ein Verbindungsstück (40) vorgesehen ist. Die Bolzen (18, 20) können in oder auf dem Verbindungsstück (40) lagern oder auf der Gabel (16, 30) und-/oder selbst an den Wellen (1, 3) befestigt sein. Entsprechend können die Bohrungen (17a, 17b, 72) in der Gabel (16) und/oder im Verbindungsstück (40) als Bohrungen (41, 42) vorgesehen sein. Die Bohrungen können mit Gleitstucken (Keramikeinlagen (23, 24)) jeder Art ausgelegt sein, so daß die erforderliche Drehung und axiale Verschiebung der Bolzen sowie der Welle (3) in Richtung der Pfeile (19, 19a, 19b) gesichert ist.

Die Fig. 11a bis 11f zeigen hierzu verschiedene Ausführungsbeispiele des Verbindungsstückes (40). Die Bolzen (18, 20) sind eingezeichnet. Sie liegen außerhalb der Achse (A-A oder B-B) der Wellen (1 bzw. 3). In den Fällen, in denen sie einseitig gelagert sind, sind vorteilhaft die Lagerhutsen (Keramikeinlagen (23, 24)) so ausgebildet und angeordnet, daß der Erfolg gewährleistet ist.

In Fig. 11d ist der Bolzen (18) seitlich zur Achse (D-D) versetzt, beispielsweise um den Betrag (35a), wodurch ihm die zweite elliptische Bewegung aufgezwungen wird.

Die Fig. 11e und 11f zeigen die Lagerung in den jeweiligen Verbindungsstücken (40). Die Welle (3) läuft nur mit einem in ihr befestigten Bolzen (20) in das Teil (40) ein, wogegen der Bolzen (18) in der Bohrung (42) des Verbindungsstückes (40) gelagert ist. Gestrichelt eingezeichnet sind Führungen, welche zum Beispiel aus einem Keramikmaterial (23, 24) bestehen können, so daß sie sich nicht heißlaufen und insbesondere die Einrichtung deshalb auch für das Pumpen heißer Flüssigkeiten verwendet werden kann.

Die Fig. 12a bis 12h zeigen weitere Ausführungsbeispiele der Verbindung der Wellen (3 und 1) über Verbindungsstücke (40).

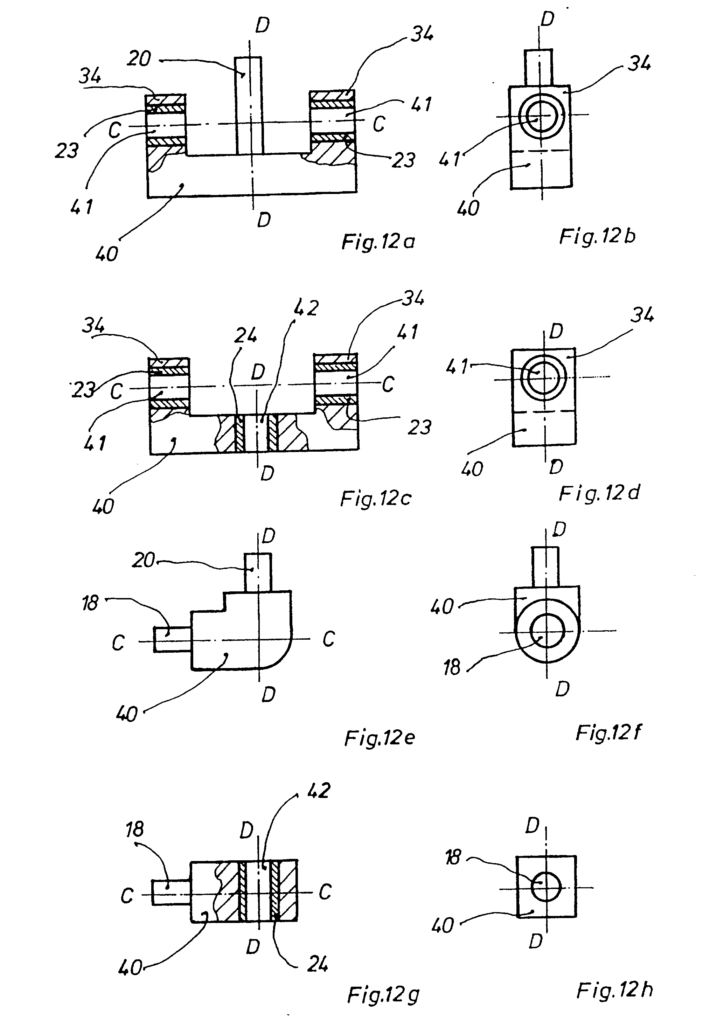

Gemäß Fig. 12a ist das Verbindungsstück (40) U-förmig ausgebildet. Auf dem Zapfen, der den Bolzen (20) ersetzt, ist die Welle (3) gelagert. In den Ausnehmungen (41) sitzen die Enden des hier geteilten Bolzens (18).

Gemäß den Fig. 12a bis 12d und 12e bis 12h greift das Ende der Welle (3) in eine Bohrung (42) (Fig. 12c) des Verbindungsstückes (40). Der Bolzen (18) kann bei dieser Ausbildung wieder durchlaufend sein.

Die Fig. 12e und 12f zeigen eine winklige Abknickung der Verbindungsmittel. Bei (20) greift die Welle (3) an und bei (18) die Gabel (16).

Die Fig. 12g und 12h zeigen eine ähnliche Ausbildung. Der Bolzen (18) greift wieder auf der Gabel (16) an. Der Bolzen (20) kann jetzt jedoch durch eine Bohrung (42) durch das Verbindungsstück (40) greifen.

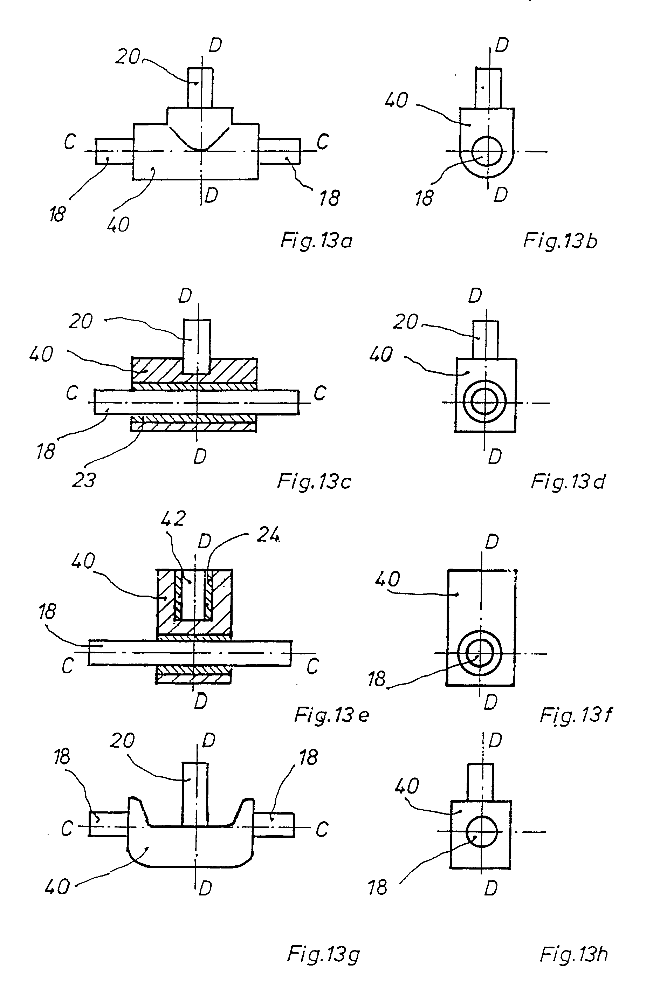

Weitere ähnliche Ausbildungen sind in den Fig. 13a bis 13h gezeigt, wobei darauf hinzuweisen ist, daß gemäß Fig. 13a und 13b die Bolzen (18, 20) zweiteilig ausgebildet sein können. Gemäß den Fig. 13c und 13d sind sie einteilig, d.h. die Bolzen durchlaufen die Hülse (23). Dasselbe gilt für die Ausbildung nach den Fig. 13e und 13f. Gemäß den Fig. 13c und 13d wird die Welle (3) mit ihrem Ende (30) auf den Bolzen (20) gesetzt. Gemäß den Fig. 13e und 13f wird sie in die Bohrung (42) des Verbindungsstückes mittels des in ihr befestigten Bolzens (20) eingebracht.

Die Fig. 13g und 13h zeigen eine ähnliche T-förmige Kreuzverbindung.

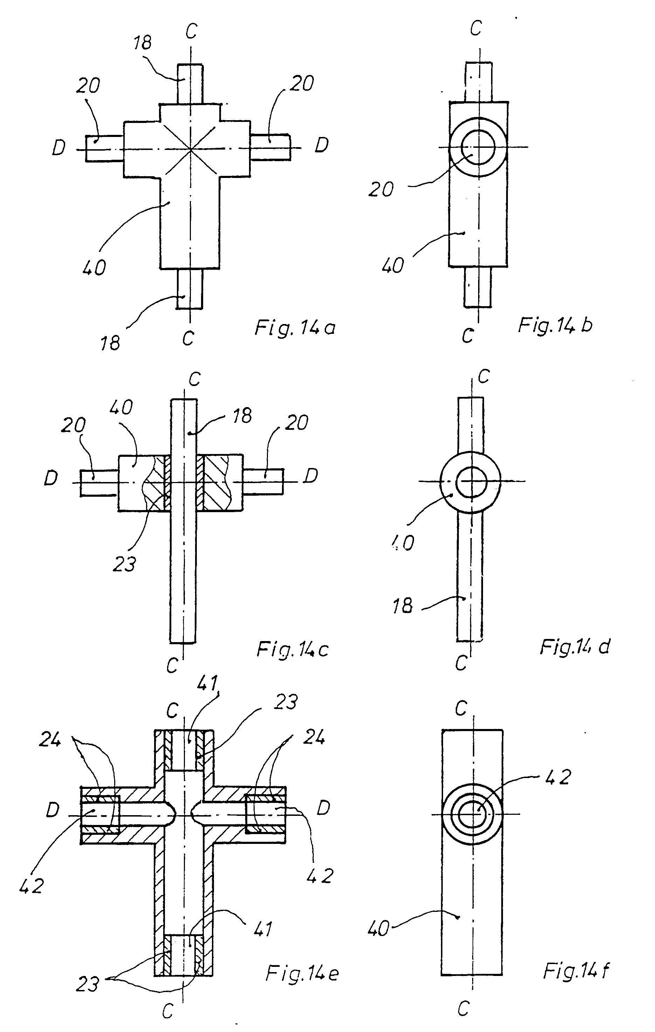

Die Fig. 14a bis 14f zeigen ähnliche Kreuzverbindungen.

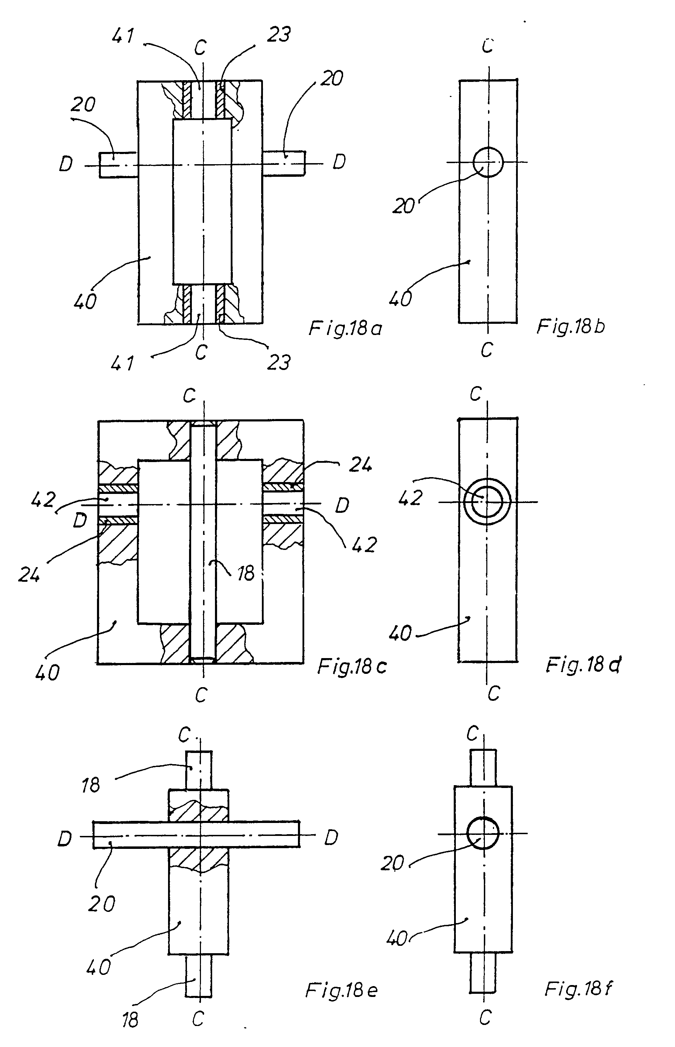

Die Fig. 18a bis 18d zeigen O-förmige Kreuzverbindungen.

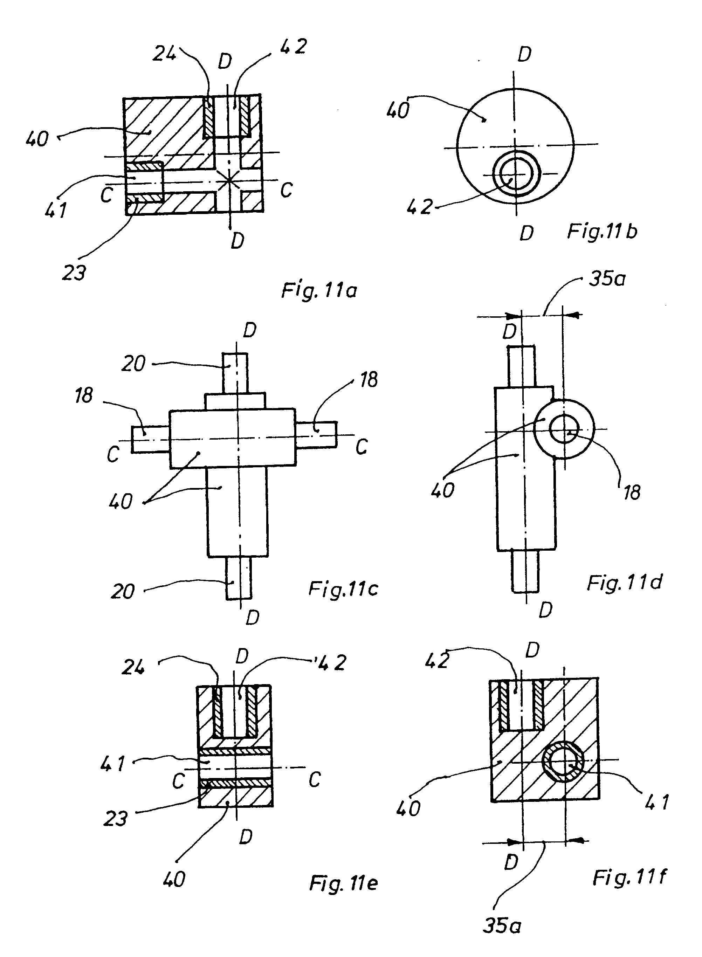

Die Verbindung der Wellen (1 und 3) braucht nicht über einen von der Welle (1) getragenen Ausläufer erfolgen, beispielsweise der Gabel (16) nach Fig. 3, sondern die Verbindung ist auch möglich, wie in Fig. 4 bereits angedeutet, über einen von der Welle (3) getragenen Ausläufer (Gabel (30)). Die Gabeln (16, 30) nach den Fig. 3 und 4 sind jedoch symmetrisch zu den Achsen sowohl der Welle (1) als auch der Welle (3) angeordnet. Diese Symmetrie ist nicht erforderlich, wie die Fig. 15 zeigt. Hiert ist die Gabel (16c) welche von der Welle (3) getragen wird, mit Schenkeln (21, 22) versehen. Die Achsen (A-A und B-B) der beiden Wellen (1, 3) scheinen hier in Verlängerung zu liegen. Dies scheint nur so, weil man auf das Element der Fig. 3 oder der Fig. 4 von oben her heraufschaut. Die Schenkel (21, 22) sind seitlich versetzt zur Achse (B-B) angeordnet und damit auch zur Achse (A-A). Sie tragen gestrichelt eingezeichnete Bohrungen (72), in denen sich der Bolzen (20) hin- und herbewegen kann und drehbar ist. An den Bolzen (18) greift die Gabel (30) an, die L-förmig ausgebildet ist und von der Welle (1) getragen wird. Die Gabel (16c) ist vorgesehen, damit sie nach einer der Kreuzverbindungen gemäß den Fig. 11 bis 14 und 18 mit den Bolzen (18, 20) verbunden werden kann.

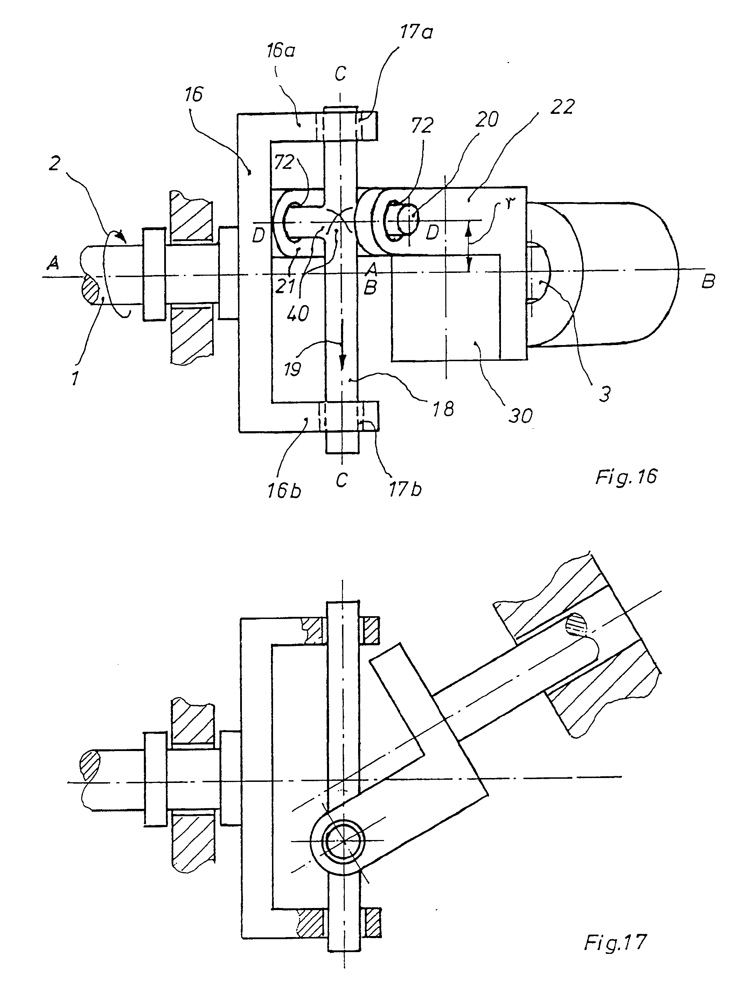

Die Bolzen (18, 20) können auch als kreuzförmiges festes Verbindungsstück gemäß Fig. 3, 4, 15, 16 und 17 mit zwei seiner Enden in den Bohrungen (17, 72) einer von den Wellen (1, 3) getragenen Gabel (16, 30) gelagert sein. Es bildet ein kreuzförmig einheitliches Teil (40), das in Bohrungen (72) des L-förmig ausgebildeten Gabelstückes (30) liegt, das wiederum fest mit der Welle (3) verbunden ist.

## Bezugszahlen

| | |
|---|---|
| 1 | Antriebswelle (Achse A-A) |
| 2 | Pfeil |
| 3 | Welle (Achse B-B) |
| 4 | Pfeil für die Hubbewegung |
| 5 | Schlitz |
| 6 | Zylinder |
| 6a | Kalotte |
| 7 | Einlaßschlitz |
| 8 | Auslaßschlitz |
| 9 | Gegenfläche für Kalotte |
| 10 | Gehäuse |
| 11 | Schrauben |
| 13 | Spiel |
| 14 | Skala |
| 15 | Marke |
| 16 | Gabel |
| 16a | Zinken |
| 16b | Zinken |
| 16c | Gabel mit unsymmetrischen Schenkeln |
| 17a | Bohrung |
| 17b | Bohrung |
| 18 | erster Bolzen (Achse C-C) |
| 19 | Pfeil |
| 19a | Pfeil |
| 19b | Pfeil |
| 20 | zweiter Bolzen (Achse D-D) |
| 21 | Schenkel |
| 22 | Schenkel |
| 23 | Keramikeinlage |
| 24 | Keramikeinlage |

| 29 | Trommel |
|----|---------|
| 30 | Gabel |
| 30a | abgeknickte Verlängerung |
| 31 | Joch |
| 33 | Wellenende |
| 34 | Schenkel |
| 35a | Versatz |
| 40 | Verbindungsstück |
| 41 | Bohrung |
| 42 | Bohrung |
| 72 | Bohrungen |
| r | Abstand der Achse eines Bolzens (18, 20) von der Achse (A-A oder B-B) |

**Ansprüche**

1. Gelenk zur Übertragung des Drehmomentes einer ersten Welle (1) auf eine unter einem bestimmten Winkel zu dieser angeordneten zweiten Welle (3), das zwei mit jeweils einer der beiden Wellen verbundene, sich kreuzende und in drehbaren Lagern angeordnete Bolzen (18, 20) aufweist, die untereinander durch ein Verbindungsstück oder unmittelbar verbunden sind, deren Bolzenachsen (C-C, D-D) oder deren kürzeste Verbindungslinie außerhalb des Schnittpunktes (O) der Achsen (A-A, B-B) der ersten und zweiten Welle (1, 3) liegen oder außerhalb der senkrechten Verbindungslinie zwischen diesen beiden Wellenachsen, wodurch abhängig vom Winkel zwischen den Achsen der beider Wellen (1, 3) die zweite Welle (3) zusätzlich eine Hubbewegung ausführt, **dadurch gekennzeichnet,** daß mindestens einer der zwei Bolzen (18, 20) in einer axial verschiebbaren Lagerung angeordnet ist.

2. Gelenk nach Anspruch 1, dadurch gekennzeichnet, daß die erste Welle (1) in eine Gabel (16), Trommel oder dergleichen ausläuft, welche außerhalb der Drehachse (A-A) der ersten Welle (1) Bohrungen (17a, 17b) für den Bolzen (18) aufweist, daß der Bolzen (18) in diesen Bohrungen axial verschiebbar und drehbar gelagert ist, und daß dieser Bolzen (18) mit dem zweiten Bolzen (20) unmittelbar oder über ein Verbindungsstück verbunden und der zweiten Welle zugeordnet ist.

3. Gelenk nach Anspruch 1, dadurch gekennzeichnet, daß die Achsen der Bolzen (18, 20) senkrecht zueinander ausgerichtet sind und sich schneiden.

4. Gelenk nach Anspruch 1, dadurch gekennzeichnet, daß die Achsen der Bolzen (18, 20) mit Abstand (35a) aneinander vorbeilaufen.

5. Gelenk nach Anspruch 3 oder 4, dadurch gekennzeichnet, daß der Schnittpunkt oder die kürzeste Verbindungslinie der Achsen der Bolzen stets einen Abstand vom Schnittpunkt der Achsen (A-A, B-B) der Wellen (1, 3) aufweist.

6. Gelenk nach Anspruch 1, dadurch gekennzeichnet, daß die zweite Welle (3) in ein T-förmiges Verbindungsstück (40) ausläuft, das mit seinen T-Schenkeln drehbar oder auch verschiebbar in den Bohrungen der Gabel, Trommel oder dergleichen der ersten Welle (1) oder auch der zweiten Welle (3) gelagert ist.

7. Gelenk nach Anspruch 1, dadurch gekennzeichnet, daß die zweite Welle (3) eine Gabel (30) aufweist, die den zweiten Bolzen (20) trägt, der mit dem ersten Bolzen (18) verbunden ist.

8. Gelenk nach Anspruch 7, dadurch gekennzeichnet, daß der Ausläufer der zweiten Welle (3) L-Förmig abgeknickt ist und in seinem L-Schenkel eine Bohrung (72) für den Bolzen (20) aufweist.

9. Gelenk nach Ansnruch 8, dadurch gekennzeichnet, daß der L-förmige Ausläufer (30) unsymmetrisch zur Achse (B-B) der zweiten Welle (3) angeordnet ist, und daß die zweite Welle (3) versetzt zur Achse (A-A) der ersten Welle ein U-förmiges Teilstück (21, 22) aufweist, dessen Schenkel den Bolzen (20) drehbar oder

7

auch axial verschiebbar tragen.

10. Gelenk nach Anspruch 1, dadurch gekennzeichnet daß der Bolzen (18) in einer Bohrung eines L-förmigen Ausläufers (Gabel (30)) der ersten Well (1) läuft (Fig. 15).

11. Gelenk nach Anspruch 1, dadurch gekennzeichnet, daß die Bolzen (18, 20) und gegebenenfalls Teile der ersten oder auch zweiten Welle in einem. T-, kreuz-, L-. U-, O-förmigen oder entsprechend ausgebildeten Verbindungsstück (40) gelagert oder befestigt sind (Fig. 11 bis 14 und 18).

12. Gelenk nach Anspruch 1, dadurch gekennzeichnet, daß die Welle (3 oder 1) eine rechtwinklig abgeknickte Verlängerung (30 a, 21) mit einer Führung oder Bohrung (42) für den Bolzen (20 oder 18) aufweist (Fig. 5, 6, 7).

13. Gelenk nach Anspruch 1, dadurch gekennzeichnet, daß wenigstens ein Bolzen (18, 20) jeweils in den Schenkeln (34) eines U-förmigen Verbindungsstückes (40) gelagert ist (Fig. 12a, 12b, 12c, 12d).

14. Gelenk nach Anspruch 13, dadurch gekennzeichnet, daß der Bolzen des Verbindungsstückes (40) in einer längeren Bohrung gelagert ist (Fig. 18).

15. Gelenk nach Anspruch 1, dadurch gekennzeichnet, daß die Achsen (C-C, D-D) der Bolzen (18, 20) sich in einem Punkt schneiden.

16. Gelenk nach Anspruch 1, dadurch gekennzeichnet, daß die Achsen (C-C, D-D) der Bolzen (18, 20) sich nicht in einem Punkt schneiden, so daß zwischen ihren Achsen zwangsläufig ein Abstand (35a) entsteht.

17. Gelenk nach Anspruch 1, dadurch gedennzeichnet, daß die Bolzen (18, 20) rechtwinklig zu den Drehachsen (A-A, B-B) der beiden Wellen (1, 3) angeordnet sind und daß sich die Achsen (A-A und B-B) der ersten (1) und zweiten Welle (3) in einem Punkt (O) schneiden.

18. Gelenk nach Anspruch 1, dadurch gekennzeichnet, daß eine der beiden Bolmzenachsen (C-C oder D-D) durch den Schnittpunkt der Wellenachsen (A-A, B-B) oder durch die kürzeste Verbindungslinie dieser Wellenachsen hindurchgeht.

19. Gelenk nach Anspruch 1, dadurch gekennzeichnet, daß die den Bolzen (20) tragende zweite Welle (3) gelenkig mit einem als Führung für den Bolzen (20) dienenden Verbindungsstück (40) verbunden ist (Fig. 11c, 11d, 12c, 12d).

20. Gelenk nach Anspruch 19, dadurch gekennzeichnet, daß einer der Bolzen (18, 20) unterteilt ist und mit seinen Endteilen in das Verbindungsstück (40) greift (Fig. 1, 2 sowie 18c, 18d).

21. Gelenk nach Anspruch 1, dadurch gekennzeichnet, daß die Achse des Bolzens (18) mit einem Abstand zur Drehachse (A-A) wenigstens der ersten Welle angeordnet ist.

22. Gelenk nach Anspruch 1, dadurch gekennzeichnet, daß die Achse des Bolzens (18) mit einem Abstand zur Drehachse (A-A, B-B) der beiden Wellen (1, 3) angeordnet ist.

23. Gelenk nach Anspruch 1, dadurch gekennzeichnet, daß der Bolzen (18 oder 20) in einer Gabel (16), Trommel (29) oder dergleichen angeordnet ist und das Verbindungsstück (40) den anderen Bolzen (20 oder 18) trägt.

24. Gelenk nach Anspruch 1, dadurch gekennzeichnet, daß der eine oder andere Bolzen (18, 20) fest mit der zugehörigen Welle (1, 3) verbunden ist, jedoch im Verbindungsstück (40) drehbar oder auch axial verschiebbar gelagert ist.

25. Gelenk nach Anspruch 1, dadurch gekennzeichnet, daß die Bolzen (18, 20) in wenigstens einer der Wellen (1, 3) oder deren Gabeln (16), Trommeln oder Ausläufer (30) fest angeordnet sind und das Verbindungsstück die Dreh- und Verschiebefunktion der Bolzen (18, 20) übernimmt.

26. Gelenk nach Anspruch 1, dadurch gekennzeichnet, daß die Teile des Gelenkes, die der Welle (1) zugeordnet sind, wenigstens teilweise von der Welle (3) getragen werden oder umgekehrt (Fig. 15).

27. Gelenk nach Anspruch 1, dadurch gekennzeichnet, daß die zweite Welle (3) einen Steuerzylinder betätigt (Fig. 1, 2).

28. Gelenk nach Anspruch 1, dadurch gekennzeichnet, daß die zweite Welle (3) mit kolbenartigen Teilen, welche eine oszillierende Bewegung bewirken, versehen ist (Fig. 1, 2).

29. Gelenk nach Anspruch 1, dadurch gekennzeichnet, daß die zweite Welle (3) für Steuerzwecke kolbenartig ausgebildet ist und mit Hilfe von wenigstens eines Schlitzes (5) Ein- und Auslaßschlitze (7, 8) eines Zylinders (6) nacheinander freigibt (Fig. 1, 2).

30. Gelenk nach Anspruch 1, dadurch gekennzeichnet, daß der Winkel zwischen den Wellenachsen (A-A und B-B) einstellbar ist.

31. Gelenk nach Anspruch 1 oder einem der vorhergehenden Ansprüche, dadurch gekennzeichnet, daß die Bohrungen oder Führungen für die Bolzen mit einem verschleißarmen, hitzebeständigen und korrosionsarmen Material ausgelegt sind, wie Keramik, rostfreier Stahl, kunststoff, Siliziumkarbid oder dergleichen.

## Claims

1. Coupling for transmitting the torque from a first shaft (1) to a second shaft (3) arranged at a certain angle to the first, the said coupling having two bolts (18, 20) which cross one another and are arranged in rotating bearings, each being connected to one of the two shafts and connected together either directly or by means of a connecting member while their axes (C-C, D-D) or shortest line of connection is located away from the point of intersection (O) of the axes (A-A, B-B) of the first and second shafts (1, 3) or from the vertical line connecting the two shaft axes, so that regardless of the angle formed by the axes of the two shafts (1, 3) the second shaft (3) is additionally able to execute a lifting movement, characterised in that at least one of the two bolts (18, 20) is arranged in a bearing able to move in an axial direction.

2. Coupling as claimed in Claim 1, characterised in that the first shaft (1) terminates in a fork (16), drum or the like having bores (17a, 17b) away from the axis of rotation (A-A) of the first shaft (1) to accommodate the bolt (18) and in that the bolt (18) is mounted in these bores so as to be axially movable and rotatable therein and in that the said bolt (18) is connected to the second bolt (20) directly or by means of a connecting member and associated with the second shaft.

3. Coupling as claimed in Claim 1, characterised in that the axes of the bolts (18, 20) extend at right angles to one another and intersect.

4. Coupling as claimed in Claim 1, characterised in that the axes of the bolts (18, 20) move past one another at a distance (35a).

5. Coupling as claimed in Claim 3 or 4, characterised in that the point of intersection or the shortest line connecting the axes of the bolts is always located at a distance from the point of intersection of the axes (A-A, B-B) of the shafts (1, 3).

6. Coupling as claimed in Claim 1, characterised in that the second shaft (3) terminates in a T-shaped connecting member (40) and that the arms of the T are mounted rotably or slidably in the bores of the fork, drum or the like of the first shaft (1) or of the second shaft (3).

7. Coupling as claimed in Claim 1, characterised in that the second shaft (3) is provided with a fork (30) that carries the second bolt (20) which is connected to the first bolt (18).

8. Coupling as claimed in Claim 7, characterised in that the end of the second shaft (3) is bent in the form of an L and that the arm of the said L contains a bore (72) to accommodate the bolt (20).

9. Coupling as claimed in Claim 8, characterised in that the L-shaped end (30) is arranged assysmetrically to the axis (B-B) of the second shaft (3) and that the second shaft (3) has a U-shaped member (21, 22) which is offset relatively to the axis (A-A) of the first shaft, the arms of the said U-shaped member carrying the bolt (20) which is rotatable or axially slidable therein.

10. Coupling as claimed in Claim 1, characterised in that the bolt (18) runs in the bore of an L-shaped end (fork (30)) of the first shaft (1) (Fig. 15).

11. Coupling as claimed in Claim 1, characterised in that the bolts (18, 20) and where appropriate also parts of the first and/or second shaft are mounted or fixed in a connecting member 40 which is in or arranged in the form of a T, X, L, U or O (Figs. 11 to 14 and 18).

12. Coupling as claimed in Claim 1, characterised in that the shaft (3 or 1) is provided with an extension (30a, 21) which is bent at right angles and is provided with a guide or bore (42) for the bolt (20 or 18) (Figs. 5, 6, 7).

13. Coupling as claimed in Claim 1, characterised in that at least one bolt (18, 20) is mounted in the legs (34) of a U-shaped connecting member (40) (Figs. 12a, 12b, 12c, 12d).

14. Coupling as claimed in Claim 13, characterised in that the bolt of the connecting member (40) is mounted in a extended bore (Fig. 18).

15. Coupling as claimed in Claim 1, characterised in that the axes (C-C, D-D) of the bolts (18, 20) intersect at a certain point.

16. Coupling as claimed in Claim 1, characterised in that the axes (C-C, D-D) of the bolts (18, 20) do not intersect so that there is necessarily a clearance (35a) between their two axes.

17. Coupling as claimed in Claim 1, characterised in that the bolts (18, 20) are arranged at right angles to the axes of rotation (A-A, B-B) of the two shafts (1, 3) and that the axes (A-A and B-B) of the first (1) and second shaft (3) intersect at a point (O).

18. Coupling as claimed in Claim 1, characterised in that one of the two axes of the bolts (C-C or D-D) passes through the point of intersection of the axes (A-A, B-B) of the shafts or through the shortest line connecting the two shaft axes.

19. Coupling as claimed in Claim 1, characterised in that the second shaft (3) carrying the bolt (20) is articulated to a connecting member (40) which serves to guide the bolt (20) (Figs. 11c, 11d, 12c, 12d).

20. Coupling as claimed in Claim 19, characterised in that one of the bolts (18, 20) is split and that its ends

9

engage with the connecting member (40) (Figs. 1, 2 and 18c, 18d).

21. Coupling as claimed in Claim 1, characterised in that the axis of the bolt (18) is arranged at a distance to the axis of rotation (A-A) of at least the first shaft.

22. Coupling as claimed in Claim 1, characterised in that the axis of the bolt (18) is arranged at a distance to the axis of rotation (A-A, B-B) of the two shafts (1, 3).

23. Coupling as claimed in Claim 1, characterised in that the bolt (18 or 20) is arranged in a fork (16), drum (29) or the like and that the connecting member (40) carries the other bolt (20 or 18).

24. Coupling as claimed in Claim 1, characterised in that one of the two bolts (18, 20) is fixed rigidly to its shaft (1, 3) but is mounted so as to be rotatable or axially slidable in the connecting member (40).

25. Coupling as claimed in Claim 1, characterised in that the bolts (18, 20) are fixed in at least one of the shafts (1, 3) or their forks (16), drums or end-pieces (30) and that the connecting member performs the rotary or sliding function of the bolts (18, 20).

26. Coupling as claimed in Claim 1, characterised in that the parts of the coupling associated with the shaft (1) are at least partly carried by the shaft (3) or vice-versa (Fig. 15).

27. Coupling as claimed in Claim 1, characterised in that the second shaft (3) actuates a control cylinder (Figs. 1, 2).

28. Coupling as claimed in Claim 1, characterised in that the second shaft (3) is provided with piston-like members which produce an oscillating movement (Figs. 1, 2).

29. Coupling as claimed in Claim 1, characterised in that the second shaft (3) is made in the form of a piston for control purposes and with the help of at least one slot (5) opens in succession the inlet and outlet slots (7, 8) of a cylinder (6) (Figs. 1, 2).

30. Coupling as claimed in Claim 1, characterised in that the angle formed by the axes (A-A and B-B) of the shafts is adjustable.

31. Coupling as claimed in Claim 1 or any one of the foregoing claims, characterised in that the bores or guides for the bolts are lined with a wear, heat- and corrosion-resistant material such as ceramic, stainless steel, plastics, silicon carbide or the like.


## Revendications

1. Joint articulé pour la transmission du couple d'un premier arbre (1) à un deuxième arbre (3) orienté selon un angle déterminé par rapport au premier, présentant deux goujons (18, 20) qui sont chacun reliés à l'un des deux arbres, se croisent, sont montés dans des paliers mobiles et sont reliés entre eux par un élément de liaison ou directement, dont les axes de goujon (C-C, D-D) ou la ligne de liaison la plus courte se trouve en dehors du point d'intersection (O) des axes (A-A, B-B) du premier et du deuxième arbre (1, 3) ou en dehors de la ligne de liaison perpendiculaire formée par ces deux axes d'arbre, d'où il résulte que, en fonction de l'angle formé par les axes des deux arbres (1, 3), le deuxième arbre (3) effectue en outre une course verticale, **caractérisé en** ce qu'au moins l'un des deux goujons (18, 20) est monté dans un palier pouvant se déplacer dans le plan axial.

2. Joint articulé selon la revendication 1, caractérisé en ce que le premier arbre (1) se termine par une fourche (16), un tambour ou similaire présentant en dehors de l'axe de rotation (A-A) du premier arbre (1) des alésages (17a, 17b) destinés à recevoir le goujon (18), en ce que le goujon (18) est logé dans ces alésages de manière à pouvoir effectuer un déplacement axial et une rotation, et en ce que ce goujon (18) est relié au deuxième goujon (20) directement ou par l'intermédiaire d'un élément de liaison et qu'il est affecté au deuxième arbre.

3. Joint articulé selon la revendication 1, caractérisé en ce que les axes des goujons (18, 20) forment des perpendiculaires sécantes.

4. Joint articulé selon la revendication 1, caractérisé en ce que les axes des goujons (18, 20) courent à un certain écart (35a) l'un de l'autre.

5. Joint articulé selon la revendication 3 ou 4, caractérisé en ce que le point d'intersection ou la plus courte ligne de liaison des axes des goujons présente toujours un écart par rapport au point d'intersection des axes (A-A, B-B) des arbres (1, 3).

6. Joint articulé selon la revendication 1, caractérisé en ce que le deuxième arbre (3) se termine par un élément de liaison en T (40) qui, par ses branches en T, est monté de manière à pouvoir effectuer une rotation ou un déplacement dans les alésages pratiqués dans la fourche, le tambour ou similaire du premier arbre (1) ou du deuxième arbre (3).

7. Joint articulé selon la revendication 1, caractérisé en ce que le deuxième arbre (3) présente une fourche (30) qui porte le deuxième goujon (20) relié au premier goujon (18).

8. Joint articulé selon la revendication 7, caractérisé en ce que l'extrémité du deuxième arbre (3) est coudée en L et en ce qu'elle est pourvue sur sa branche en L d'un alésage (72) destiné à recevoir le goujon (20).

9. Joint articulé selon la revendication 8, caractérisé en ce que l'extrémité en L (30) est asymétrique par rapport à l'axe (B-B) du deuxième arbre (3), et en ce que le deuxième arbre (3) présente un élément (21, 22) en U qui est décalé par rapport à l'axe (A-A) du premier arbre et dont les branches portent le goujon (20) de manière à pouvoir effectuer une rotation ou un déplacement axial.

10. Joint articulé selon la revendication 1, caractérisé en ce que le goujon (18) est logé dans un alésage ménagé dans une extrémité en L (fourche (30)) du premier arbre (1) (Fig. 15).

11. Joint articulé selon la revendication 1, caractérisé en ce que les goujons (18, 20) et, le cas échéant, des parties du premier ou du deuxième arbre sont montés ou fixés dans un élément de liaison (40) en forme de T, de croix, de L, de U, de O ou de forme adéquate (Fig. 11 à 14 et 18).

12. Joint articulé selon la revendication 1, caractérisé en ce que les arbres (3 ou 1) présentent un prolongement (30a, 21) coudé à angle droit et pourvu d'un guide ou d'un alésage (42) destiné à recevoir le goujon (20 ou 18) (Fig. 5, 6, 7).

13. Joint articulé selon la revendication 1, caractérisé en ce qu'au moins un goujon (18, 20) est monté dans une des branches (34) d'un élément de liaison en U (40) (Fig. 12a, 12b, 12c, 12d).

14. Joint articulé selon la revendication 13, caractérisé en ce que le goujon de l'élément de liaison (40) se loge dans un alésage plus long (Fig. 18).

15. Joint articulé selon la revendication 1, caractérisé en ce que les axes (C-C, D-D) des goujons (18, 20) se coupent en un point.

16. Joint articulé selon la revendication 1, caractérisé en ce que les axes (C-C, D-D) des goujons (18, 20) ne se coupent pas en un point, de sorte qu'il existe forcément un écart (35a) entre leurs axes.

17. Joint articulé selon la revendication 1, caractérisé en ce que les goujons (18, 20) sont disposés à angle droit par rapport aux axes de rotation (A-A, B-B) des deux arbres (1, 3) et en ce que les axes (A-A et B-B) du premier arbre (1) et du deuxième arbre (3) se coupent en un point (O).

18. Joint articulé selon la revendication 1, caractérisé en ce que l'un des deux axes de goujon (C-C ou D-D) passe par le point d'intersection des axes des arbres (A-A, B-B) ou la ligne de liaison la plus courte des axes de ces arbres.

19. Joint articulé selon la revendication 1, caractérisé en ce que le deuxième arbre (3) portant le goujon (20) s'articule sur un élément de liaison (40) servant de guide du goujon (20) (Fig. 11c, 11d, 12c, 12d).

20. Joint articulé selon la revendication 19, caractérisé en ce que l'un des goujons (18, 20) est subdivisé et qu'il s'engage par ses extrémités dans l'élément de liaison (40) (Fig. 1, 2 et 18c, 18d).

21. Joint articulé selon la revendication 1, caractérisé en ce que l'axe du goujon (18) présente un certain écart par rapport à l'axe de rotation (A-A) au moins du premier arbre.

22. Joint articulé selon la revendication 1, caractérisé en ce que l'axe du goujon (18) présente un certain écart par rapport à l'axe de rotation (A-A, B-B) des deux arbres (1, 3).

23. Joint articulé selon la revendication 1, caractérisé en ce que le goujon (18 ou 20) est placé dans une fourche (16), un tambour (29) ou similaire et en ce que l'élément de liaison (40) porte l'autre goujon (20 ou 18).

24. Joint articulé selon la revendication 1, caractérisé en ce que l'un ou l'autre goujon (18, 20) est solidaire de l'arbre correspondant (1, 3), tout en étant monté dans un élément de liaison (40) de manière à pouvoir effectuer une rotation ou un déplacement axial.

25. Joint articulé selon la revendication 1, caractérisé en ce que les goujons (18, 20) sont fixés dans au moins l'un des arbres (1, 3) ou dans leurs fourches (16), tambours ou extrémités (30) et en ce que l'élément de liaison assure les fonctions de rotation et de déplacement des goujons (18, 20).

26. Joint articulé selon la revendication 1, caractérisé en ce que les parties du joint articulé qui sont affectées à l'arbre (1) sont portées au moins en partie par l'arbre (3) ou inversement (Fig. 15).

27. Joint articulé selon la revendication 1, caractérisé en ce que le deuxième arbre (3) actionne un cylindre de commande (Fig. 1, 2).

28. Joint articulé selon la revendication 1, caractérisé en ce que le deuxième arbre (3) est pourvu d'éléments en forme de piston qui génèrent un mouvement d'oscillation (Fig. 1, 2).

29. Joint articulé selon la revendication 1, caractérisé en ce que, à des fins de commande, le deuxième arbre (3) est réalisé sous forme de piston et dégage successivement, au moyen d'au moins une fente (5), des fentes d'admission et d'échappement (7, 8) d'un cylindre (6) (Fig. 1, 2).

30. Joint articulé selon la revendication 1, caractérisé en ce que l'angle entre les axes des arbres (A-A et B-B) est réglable.

31. Joint articulé selon la revendication 1 ou l'une des revendications ci-dessus, caractérisé en ce que les alésages ou guides prévus pour les goujons sont conçus en un matériau à faible usure, résistant aux températures élevées et à faible corrosion, tel que céramique, acier inoxydable, matière synthétique, carbure de sili-

11

cium, etc.

Fig. 1

Fig. 2

Fig. 3

Fig. 4

Fig.5

Fig. 6

Fig. 7

Fig. 8

Fig.9

Fig.10

Fig. 11a

Fig. 11 b

Fig. 11c

Fig. 11d

Fig. 11e

Fig. 11 f

Fig.12a

Fig.12b

Fig.12c

Fig.12d

Fig.12e

Fig.12f

Fig.12g

Fig.12h

Fig.13a

Fig.13b

Fig.13c

Fig.13d

Fig.13e

Fig.13f

Fig.13g

Fig.13h

19

Fig. 14 a

Fig. 14 b

Fig. 14 c

Fig. 14 d

Fig. 14 e

Fig. 14 f

Fig. 15

Fig. 16

Fig.17

Fig.18 a

Fig.18 b

Fig.18 c

Fig.18 d

Fig.18 e

Fig.18 f